# Europäisches Patentamt
## European Patent Office
## Office européen des brevets

(19)

(11) Veröffentlichungsnummer: **0 324 757 B1**

(12)

# EUROPÄISCHE PATENTSCHRIFT

(45) Veröffentlichungstag der Patentschrift:
**11.12.91 Patentblatt 91/50**

(51) Int. Cl.$^5$: **G01B 11/02**

(21) Anmeldenummer: **87906154.7**

(22) Anmeldetag: **18.09.87**

(86) Internationale Anmeldenummer:
**PCT/DE87/00423**

(87) Internationale Veröffentlichungsnummer:
**WO 88/02097 24.03.88 Gazette 88/07**

(54) **VERFAHREN ZUR ERWEITERUNG DER AUFLÖSUNG EINER ZEILEN- ODER MATRIXKAMERA.**

(30) Priorität: **20.09.86 DE 3632070**

(43) Veröffentlichungstag der Anmeldung:
**26.07.89 Patentblatt 89/30**

(45) Bekanntmachung des Hinweises auf die
Patenterteilung:
**11.12.91 Patentblatt 91/50**

(84) Benannte Vertragsstaaten:
**AT BE CH DE FR GB IT LI LU NL SE**

(56) Entgegenhaltungen:
**FR-A-25 129 45**
**GB-A-20 583 44**
**JP-A-59 099 304**

(73) Patentinhaber:
**FRAUNHOFER-GESELLSCHAFT ZUR
FÖRDERUNG DER ANGEWANDTEN
FORSCHUNG E.V.
Leonrodstrasse 54
W-8000 München 19 (DE)**

(72) Erfinder: **PFEIFER, Tilo
Eupenerstrasse 299d
W-5100 Aachen (DE)**
Erfinder: **MOLITOR, Martin
Roermonderstrasse 369
W-5100 Aachen (DE)**

EP 0 324 757 B1

## Beschreibung

Technisches Gebiet

Die Erfindung bezieht sich auf ein Verfahren zur Erweiterung der Auflösung einer Zeilen- oder Matrixkamera mit einer elektronischen Auswerteschaltung mit den Merkmalen der im Oberbegriff des Patentanspruchs 1 bezeichneten Gattung.

Stand der Technik

Die Technik der Längenmessung mit Hilfe von Halbleiterkameras ist bekannt. Dabei wird ein Objekt mit einer Lichtquelle von hinten beleuchtet und sein Schattenbild durch eine optisch abbildende Anordnung auf den Bildaufnehmer abgebildet. Wenn sich das Objekt in Meßposition ganz im Bildbereich der Kamera befindet, ermittelt sich zum Beispiel bei der Zeilenkamera die Länge des Teiles aus der Anzahl der abgeschatteten Fotodioden, die sich zwischen dem Schattenkantenübergang von Hell nach Dunkel und dem Übergang von Dunkel nach Hell befinden, multipliziert mit dem Abbildungsmaßstab der optischen Anordnung. Die erreichbare Meßgenauigkeit einer Zeilenkamera wird dabei in erster Linie durch das Verhältnis von Meßbereich zur Anzahl vorhandener Fotodioden in einer Zeile bestimmt.

Halbleiterbildaufnehmer zeichnen sich durch eine ortsdiskrete Struktur lichtempfindlicher Elemente endlicher Ausdehnung aus. Einer Minimierung dieser auf einem Halbleiterchip integrierbaren Bildpunkte sind von der Herstellung her Grenzen gesetzt. Die derzeitig minimal erreichbare Ausdehnung eines solchen Bildpunkte liegt bei ca. 7 µm im Quadrat. Demzufolge besteht beispielsweise bei einer Zeilenkamera mit einer Zeilenlänge von 28,67 mm die Fotodiodenzeile aus 4096 lichtempfindlichen Elementen. Matrixkameras weisen dagegen in Zeilen- oder Spaltenrichtung Bildpunktzahlen auf, die nur etwa einem Viertel derjenigen von Zeilenkameras entsprechen. Beim Einsatz einer solchen Kamera zu meßtechnischen Zwecken im Mikrometerbereich ist es erforderlich, den Gegenstand mit starker Vergrößerung auf den Halbleiterbildaufnehmer abzubilden, um eine ausreichende Ortsauflösung zu erreichen. Die dazu notwendige starke Vergrößerung führt zu einer Verringerung der Tiefenschärfe und einem geringen Objektabstand im optischen Aufbau.

In den Anmeldungen DE-OS 30 33 260 und DE-OS 34 22 689 sind bereits bekannte Meßverfahren beschrieben. Diese beiden Verfahren zielen auf eine Steigerung der Ortsauflösung bei der Angabe der Lage einer Schattenkante auf einer Fotodiodenzeile ab. Bei der Anmeldung DE-OS 34 22 689 geschieht dies durch eine Integration der Signalspannung im Bereich eines Schattenkantenübergangs und der Verhältnisbildung dieser Integrationszeit mit der Zeit der Integration einer anderen fest eingestellten Spannung, die der Höhe der vollen Ausstrahlung der Zeile entspricht, bis hin zur Gleichheit dieser beiden Spannungen.

Bei der Integration an einer Schattenkante wird die Symmetrieeigenschaft der Verlaufsfunktion ausgenutzt, die bezüglich der 50%-Linie ihres Anstiegsbereiches vorliegt. Dieser Punkt des Treffens der Verlaufsfunktion mit der 50%-Linie wird daran erkannt, daß die Fläche unter der Verlaufsfunktion bis zur 50%-Linie gleich ist mit der Fläche über der Verlaufsfunktion im Bereich zwischen 50% und 100%. Die Bildpunkte bilden dabei über ihre Breite integrierende Treppen dieser Verlaufsfunktion. Die Integration wird dabei sowohl mit Analogintegratoren (OP mit kapazitiver Rückkopplung) als auch nach einer AD-Wandlung durch digitales Aufsummieren der Grauwerte durchgeführt. Der Nachteil einer solchen Auswertung besteht darin, daß für das Treffen dieser Aussage der vollständige Kantenverlauf bis zum Erreichen des 100%-Bereiches stattgefunden haben muß, damit die Integration zu Ende geführt werden kann. Dieser Umstand ist hinderlich, da bei der Codierung der Bilddaten eine Kantenfestlegung und damit die Erzeugung eines Datenwortes in dem Augenblick erfolgen muß, in dem die gesuchte Kantenlage, nämlich die 50%-Linie, erreicht ist, damit die Bildpunktadresse des Bildpunktzählers als grobe Kantenlageangabe abgespeichert werden kann. Die verfeinerte Adressangabe aufgrund einer integralen Auswertung liegt aber erst vor, nachdem die vollständige optische Struktur durchlaufen wurde. Nachteil bei diesem Verfahren ist damit, daß nach Durchlauf einer solchen Schattenkante eine weitere Integrationszeit benötigt wird, bis die gewünschte Ortsaussage im Augenblick der Gleichheit der beiden Spannungen vorliegt.

Ein Integrations- oder Aufsummierungsprozeß hat einen zeitlich ausgewiesenen Beginn, an dem eine Nullsetzung erfolgt, und wird über einen durch das Erreichen von Grenzkriterien begrenzten Zeitraum durchgeführt. Wenn im Videosignal einer Zeile eine optische Struktur auftritt, die aus einer dichten Aufeinanderfolge von Hell- und Dunkelübergängen besteht, wie das zum Beispiel bei einem schleifenden Schnitt einer geraden Kante mit einer Zeile der Fall ist, besteht bei der integrierenden Auswertung, die sich über mehrere Bildpunkte erstreckt, die Gefahr des Außer-Tritt-Fallens des Integrators, da dieser noch vor Beendung eines Integrationsprozesses einen neuen beginnen müßte, zu dessen Start obendrein ein Rücksetzen erforderlich ist. Das Ergebnis wäre in diesem Fall fehlerhaft und nicht geeignet, Bildaussagen in verbesserter Weise treffen zu kön-

2

nen. Eine Neusychronisierung wäre erst nach einer längeren kantenübergangsfreien Partie im Videosignal möglich. Dieses Verfahren ist demzufolge bei einer dichten Hintereinanderfolge von Schattenkanten, wie das bei dem Bild einer Zeilen- oder Matrixkamera häufig auftritt, fehlerhaft, da bereits eine zweiter Übergang begonnen hat, während noch am ersten Übergang integriert wird.

Das in der Anmeldung DE-OS 30 33 260 beschriebene Verfahren benutzt das gleiche Kriterium zur Verfeinerung der Ortsangabe, nur wird hierbei nicht mit der analogen Integration der Spannung gearbeitet, sondern anhand von 4 Schwellwerten das Videosignal digitalisiert, die Pulse zeitlich vervierfacht und während der kompletten Auslesezeit der Zeile gezählt. Wenn die Zeile ganz ausgeleuchtet ist, ergeben sich viermal soviel Impulse wie Fotodioden in der Zeile vorhanden sind. Liegt eine Schattenkante im Bereich der Zeile in der Form vor, daß der Bereich vorher hell und der Bereich dahinter dunkel ist oder umgekehrt, dann ergeben sich nach dem Auslesen der Zeile entsprechend weniger Impulse, je weniger vom hellen Bereich auf der Zeile abgebildet wird. Wegen der vier verwendeten Schwellen ist die somit getroffene Ortsaussage vierfach verfeinert. Dieses Verfahren hat aber den Nachteil, daß nur ein Kantenübergang pro Zeile detektiert werden kann. Da bei der berührungslosen Längenmessung mindestens zwei, meistens aber mehr als zwei kanten in ihrer Lage zueinander bewertet werden müssen, ist das Verfahren unzureichend.

Aus der GB-PS 15 36 022 ist ferner ein Meßsystem zur Ermittlung von hellen und weniger hellen Lichtverteilungszonen bekannt. Das Auffinden der Schwerpunkte dieser Lichtverteilung auf einem Array geschieht dabei durch parallele Verarbeitung mehrerer hintereinanderliegender Bildpunkte in einem Parallelregister und mittels analogrechnertechnischer Ermittlung der mittleren Adresse durch das Verfahren der Gewichtung. Es wird eine schräg verschachtelte Arrayform vorgeschlagen, die als Ersatz für die Parallelauswertung dienen soll. Aus dieser Schrift ist die Parallelbearbeitung von mehreren aufeinanderfolgenden Bildpunkten bekannt. Anschließend wird die punktweise durchgeführte Differenzenbildung zur Differenzierung der Analogsignale geschildert. Eine Interpolation wird nicht angewandt. Auf einen derartigen Gegenstand ist die vorliegende Erfindung nicht gerichtet.

Die mit den heute am Markt verfügbaren Halbleiterbildaufnehmern im Durchlichtverfahren erzielbare Meßwertauflösung ist für viele Meßaufgaben unzureichend, dieses ist insbesondere bei den Aufgabenstellungen der Fall, bei denen es darum geht, Teile in einem großen Meßbereich mit hoher Genauigkeit zu erfassen.

Darstellung der Erfindung

Der Erfindung liegt deshalb die Aufgabe zugrunde, ein im Schaltungsaufbau einfaches und preisgünstiges Verfahren für eine erhöhte Ortsauflösung einer Zeilen- oder Matrixkamera anzugeben, das in der Lage ist, die Auflösung einer Zeilen- oder Matrixkamera um ein duales Vielfaches der durch die vorhandene Anzahl von Bildpunkten bestimmten Auflösung zu erhöhen, ohne daß dabei die Auslesegeschwindigkeit der Kamera reduziert werden muß und gleichzeitig aber beliebig viele Schattenkanten erfaßt und gemessen werden können. Diese Aufgaben werden erfindungsgemäß durch die im Patentanspruch 1 angegebenen Merkmale gelöst. Vorteilhafte Weiterbildungen des Erfindungsgegenstandes sind mit den Merkmalen der abhängigen Ansprüche 2 bis 9 gekennzeichnet.

Die Vorteile der Erfindung bestehen insbesondere darin, daß die Erweiterung der Auflösung einer Halbleiterkamera durch eine Interpolation zwischen denjenigen beiden Bildpunkten des Schattenkantenübergangs erfolgt, deren erster über dem definierten Schwellwert und deren zweiter unterhalb liegt oder umgekehrt. Durch diese Interpolation wird eine Aussage über die Position einer Schattenstruktur oder einer beliebigen Hell-Dunkel-Verteilung in einer Auflösung gemacht, die oberhalb der Ortsfrequenz des Bildaufnehmers liegt.

Bei der Interpolation zur Bildung einer verfeinerten Übergangsadresse werden also die Bildpunkte als Abtast-Stützpunkte der optischen Verlaufsfunktion im Bereich der Schattenkante angesehen. Um eine Interpolation durchfüren zu können, ist es erforderlich, eine Schwelle in den Intensitätsbereich einzubringen, bei deren Schnittpunkt mit der optischen Verlaufsfunktion des Kantenübergangs die gesuchte Adresse liegt. Die Interpolation wird dabei anhand einer Modellfunktion durchgeführt, die mit dem wahren Verlauf des Kantenübergangs möglichst gut übereinstimmt oder eine Abweichung besitzt, die unter den gegebenen optischen Bedingungen zu einem kalkulierbaren Fehler führt. Mindestens erforderlich für die Interpolation sind zwei Bildpunkte, zwischen denen die festgelegte Schwelle von der Verlaufsfunktion geschnitten werden muß. Dadurch wird der Informationsgehalt, der in den Grauwerten diese beiden Bildpunkte enthalten ist, in eine Zusatzinformation umgewandelt, die die seitliche Lage der Schattenkante betrifft. Dieser Vorgang ist schon bei der Verwendung von zwei Bildpunkten möglich. Dieser Schnittpunkt wird anhand des Schwellwertes und der beiden Stützpunkte dieser optischen Verlaufsfunktion durch eine Berechnung der Modellfunktion ermittelt. Wird diese Rechnung durch einen Festwertspeicher durchgeführt, in welchem für jede mögliche Eingangskombination ein Ergebnis abgelegt ist, dann ist eine Interpolation im Bildpunkttakt möglich.

Das Ausmaß der Erweiterung der Auflösung der Bildpunkte einer Halbleiterkamera ist durch das Verfahren selbst nicht festgelegt. Vielmehr wird die als sinnvoll anzusehende Grenze für die Erweiterung der Auflösung je nach Anwendungsfall durch den optischen Grundrauschpegel des Bildaufnehmers und durch die Breite des bei der Digitalisierung möglichen Datenwortes bestimmt. Das erfindungsgemäße Verfahren ist also in der Lage, eine Verringerung der Meßunsicherheit z. B. bei einem Längenmeßgerät herbeizuführen, das auf der Basis einer berührungslos messenden optoelektronischen Zeilen- oder Matrixkamera aufgebaut ist. Mit dem erfindungsgemäßen Verfahren kann die Messung einer beliebigen Schattenkantenhäufigkeit durchgeführt werden, ohne die Auslösegeschwindigkeit zu reduzieren, da die zu treffende Aussage im Zeittakt des Auslesens der einzelnen Bildpunkte getroffen wird.

Die Auswertung von Videosignalen im Bildpunkttakt ist für die Lauflängencodierung der Bilddaten von großer Bedeutung. Bei der Lauflängencodierung wird der Stand des Pixelzählers als Adresse des Übergangs abgespeichert. Das Über- oder Unterschreiten der Schwelle muß also innerhalb eines Bildpunkttaktes erkannt werden. Gleichzeitig muß die Zusatzinformation, die von einer Auflösungserweiterung kommt, in dieses Datenwort mit eingebunden werden. Daraus folgt, daß das Ergebnis dieser Auflösungserweiterung in dem selben Bildpunkttakt ermittelt werden muß, in dem die Schwelle getroffen wurde. Eine integrierende Auswertung dagegen ist erst in der Lage, eine Aussage am Ende des optischen Kantenübergangs zu treffen und ist daher für eine solche Weiterverarbeitung der Bilddaten nicht geeignet.

Um die Verzögerungszeiten der einzelnen elektronischen Bauelemente auszugleichen, wird eine zeitliche Verschiebung der Signale in Form der Schieberegistertechnik durchgeführt, so daß die gesamten Daten eine ganzzahlige Anzahl Takte später zur Verfügung stehen, aber mit jedem neuen Bildpunkt eine Auswertung stattfinden kann. Die dabei auftretende Verzögerungszeit ist kleiner als die Totzeit zwischen zwei Zeilen.

Halbleiterbildaufnehmer werden wie Videoröhren zeilenweise ausgelesen. Das hier beschriebene Verfahren nutzt das serielle Anliegen der Bildinformationen in Form einer punktweise abgetasteten Zeile aus, um die Erweiterung der Auflösung in Abtastrichtung und somit in Richtung der zeitlichen Abfolge der Analogsignale des Bildaufnehmers durchzuführen.

Das erfindungsgemäße Verfahren ermöglicht es, die Auflösung einer Zeilen- oder Matrixkamera um das duale Vielfache der durch die vorhandene Anzahl von Bildpunkten bestimmten Auflösung zu erweitern, ohne dadurch die Auslesegeschwindigkeit der Kamera zu reduzieren und gleichzeitig beliebig viele Schattenkanten erfassen zu können. Dieses funktioniert informationstechnisch dadurch, daß die Zusatzinformation, die in den Amplitudenwerten der beiden am Übergang beteiligten Bildpunkten enthalten ist, und deren digitale Auflösung, die durch die Qualität des Analogsignales und durch den Quantisierungsgrad des A/D-Wandlers bestimmt wird, in eine seitliche Adressverfeinerung umgerechnet wird.

Kurze Beschreibung der Zeichnung

Nachstehend wird die Erfindung anhand eines Ausführungsbeispiels und von Zeichnungen noch näher erläutert.

Es zeigen:

Fig. 1 ein Intensitätsdiagramm aus Videowerten und der örtlichen Lage von Bildpunkten mit einer idealen Kurve,

Fig. 2 dasselbe Intensitätsdiagramm, jedoch mit einer Approximation der Schattenkante durch Linearinterpolation,

Fig. 3 die bei dem erfindungsgemäßen Verfahren angewandten Geometrieverhältnisse für die Linearinterpolation,

Fig. 4 eine vergrößerte Ausschnittdarstellung aus dem Diagramm von Fig. 3,

Fig. 5 ein Blockschaltbild für die nach dem erfindungsgemäßen Verfahren arbeitende elektronische Ausschalteschaltung,

Fig. 6 ein weiteres Blockschaltbild des erfindungsgemäßen Verfahrens, das die Möglichkeit der Veränderung der Digitalisierungs- bzw. Interpolationsschwelle aufzeigt,

Fig. 7 ein Diagramm mit der Meßwertabweichung einer Zeilenkamera bei der Vermessung einer Kante ohne Auflösungserweiterung,

Fig. 8 ein Diagramm mit der Meßwertabweichung einer Zeilenkamera bei der Vermessung einer Kante mit Auflösungserweiterung,

Fig. 9 ein Diagramm mit der Meßwertabweichung einer Zeilenkamera bei der Vermessung eines Rings ohne Auflösungserweiterung und

Fig. 10 ein Diagramm mit der Meßwertabweichung einer Zeilenkamera bei der Vermessung eines Rings mit Auflösungserweiterung.

Bester Weg zur Ausführung der Erfindung

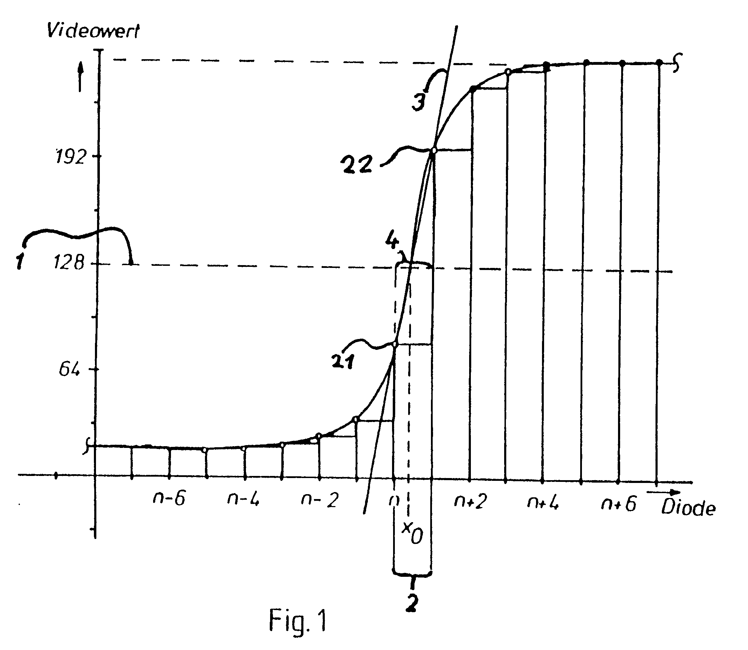

Bei einer optischen Abbildung ist eine Schattenkante auf einem Halbleiterbildaufnehmer in Abtastrichtung betrachtet keine ideal scharfe Struktur (Fig. 1). An einem Kantenübergang sind demzufolge mehrere Bildelemente beteiligt, die in ihrer Aussteuerung eine stufenweise Änderung von einem dem optoelektronischen Dunkelrauschen entsprechenden Wert zu einer hohen und durch die Stärke der Lichtquelle bestimmten Intensität hin ändern oder umgekehrt. Dabei wird der eigentliche Kantenübergang an der Stelle erreicht, an der ein noch näher zu definierender Schwellwert 1 unter- bzw. überschritten wird. Die Art des optischen Aufbaus ist dabei das Durchlichtverfahren, bei welchem ein Objekt von hinten beleuchtet wird und die Lage seiner Schattenkanten in einen Längenmeßwert umgerechnet wird. Bei einer gleichförmigen Hintergrundbeleuchtung sind dabei die Bildpunkte, die ungehindert vom Meßobjekt durch das vorher sorgfältig eingestellte Hintergrundlicht ausgeleuchtet werden, auf einen 100%-Wert ihres Empfindlichkeitsbereiches ausgesteuert. In den Partien des Bildes, die durch das Objekt abgeschaltet werden, ist die Bestrahlungsstärke gleich Null solange ein ideal intransparentes Meßobjekt vorliegt, auf welchen Anwendungsfall diese Erfindung abzielt. Die gesuchte Kante liegt nach optischen Gesetzmäßigkeiten damit an der Stelle, an der nur noch 50% der ursprünglich vorhandenen Intensität vorliegt.

Die durchzuführende Interpolation wird hier beispielsweise an einem Ausführungsbeispiel gezeigt, das geeignet ist für die Anwendung der Linearinterpolation. Die über die genaue Position der Schattenkante auf dem Bildaufnehmer zu treffende Aussage bezieht sich auf den Bereich 2 zwischen dem ersten und dem zweiten Bildpunkt 21 und 22, deren erster dunkel und deren zweiter hell ist oder umgekehrt. Eine gedachte Ausgleichsgerade, nämlich die zweite Verbindungslinie 3, die zwischen diesen beiden Bildpunkten hindurchgelegt werden kann, teilt das Intervall 4 auf der ersten horizontalen Verbindungslinie 1, die dem vorab eingestellten Schwellwert entspricht, zwischen diesen beiden Bildpunkten in einem Teilungsverhältnis, das durch das hier angegebene Verfahren ermittelt werden soll.

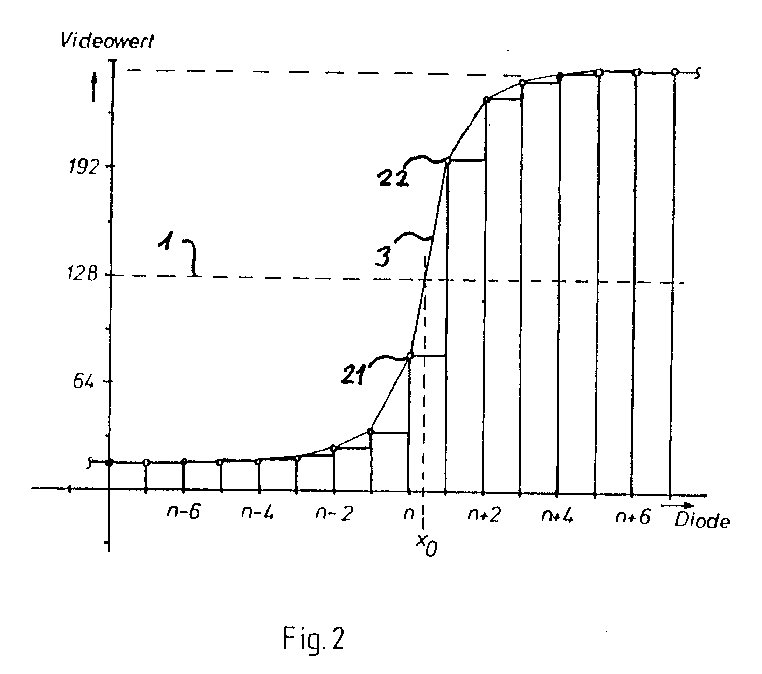

Die Approximation der Schattenkante durch Linearinterpolation ist in Fig. 2 dargestellt. Es wird hier zwar deutlich, daß die Approximation von Fig. 2 zur idealen Ausgleichslinie, die in Fig. 1 dargestellt ist, einige Abweichung aufweist. Der durch diese Abweichungen auftretende Fehler wird bei diesem Verfahren bewußt in Kauf genommen. Er wird um so geringer, je schärfer die Abbildung und demzufolge je steiler die Schattenkante ist.

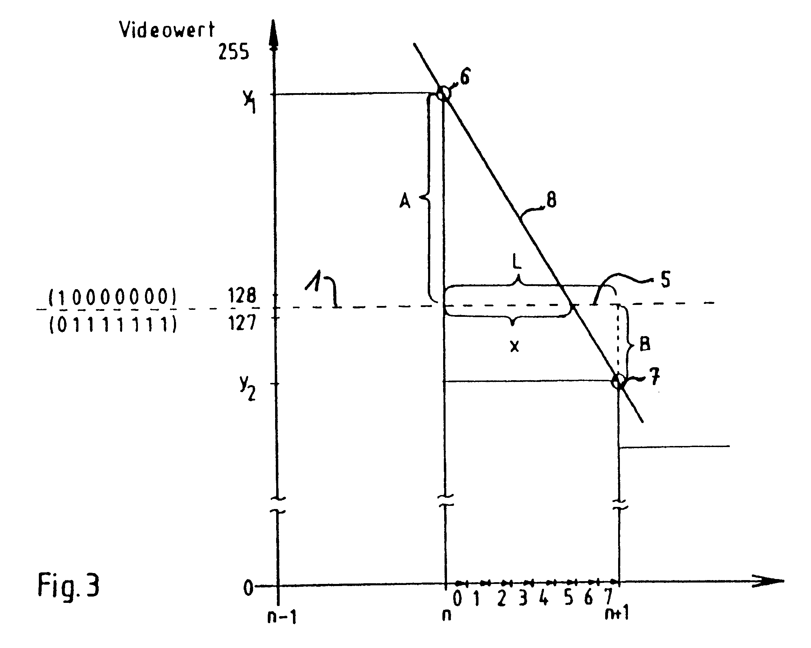

Die bei diesem Verfahren angewandten Geometrieverhältnisse sind in Figur 3 und die mathematischen Zusammenhänge dieser elektronischen Linearinterpolation sind nachstehend dargestellt.

Erzeugung des Datenfeldes:

$$A = Y_1 - 128 + 0,5 \qquad \frac{x}{Lx} = \frac{A}{B}$$
$$B = 127 - y_2 + 0,5 \qquad x * B = L * A - x * A$$

$$C = INT \left( \frac{8 * A}{A + B} \right) \qquad \text{für } m = 3 \dashrightarrow x = \frac{A}{A + B} \cdot \frac{1}{0,125}$$

```
Übergangsadresse:    (5)        k = Datenwortbreite A/D Wandlung

                                l = Datenwortbreite der Kamera-
XXX ... XXXXXXXXXXX.101             bildpunktauflösung
        1            m          m = Datenwortbreite Auflösungs-
                                    erweiterung
```

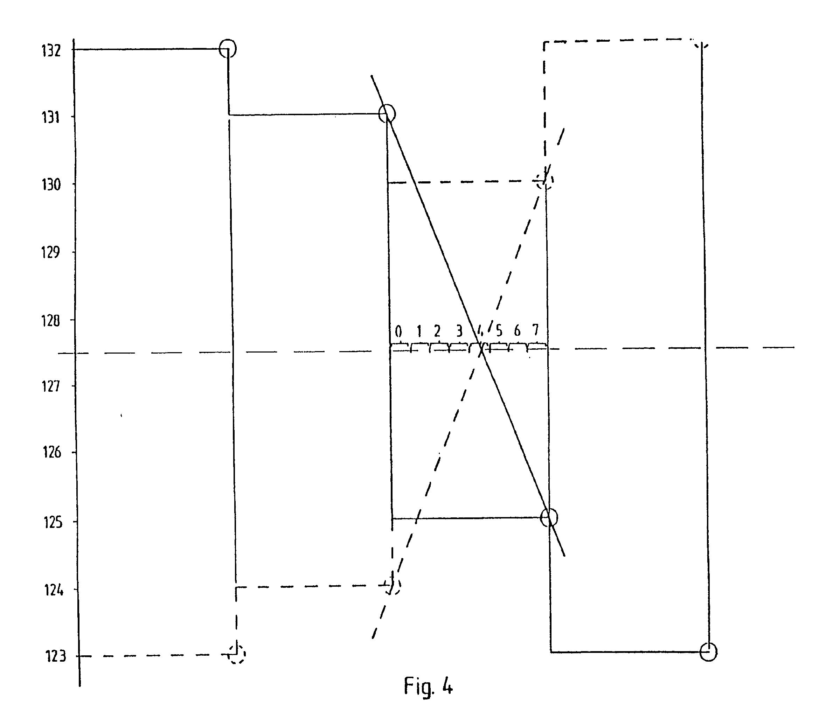

Das Intervall 5 auf der ersten horizontalen Verbindungslinie 1 zwischen den zwei Bildpunkten n und n + 1 eines Kantenübergangs, die sich in Höhe von 50% des Empfindlichkeitsbereiches befindet, wird von der zweiten Verbindungslinie 8 zwischen den Intensitätswerten des ersten und zweiten Bildpunktes 6 und 7 im gleichen Verhältnis geteilt. Dieses Teilungsverhältnis wird durch das hier beschriebene Verfahren elektronisch ermittelt und als tiefstwertigste Bitkombination der Adressangabe eines Kantenüberganges binär hinzugefügt, damit die adressmäßige Länge der optoelektronischen Halbleiterbildaufnehmerzeile um diese Binärkombination erweitert wird und die Zeile damit eine erweiterte Ortsauflösung besitzt. Die angeführten Formeln stellen exemplarisch die mathematischen Zusammenhänge für eine Drei-Bit(Acht-Stufen)-Auflösungserweiterung mit einer Acht-Bit(256-Stufen)-Analog-Digital-Wandlung dar. Dabei wird das aufzuteilende Intervall zwischen den gedachten Linien der beiden Bildpunkte, wie in Fig. 4 gezeigt, in acht Teilabschnitte aufgeteilt und derjenige Abschnitt ermittelt, innerhalb dessen die gedachte Ausgleichslinie die Horizontale schneidet. Die Funktion INTEGER bedeutet dabei die Vorkommastelle unter Abspaltung des Hinterkommaanteils der Dezimalzahl, auf die sie angewendet wird.

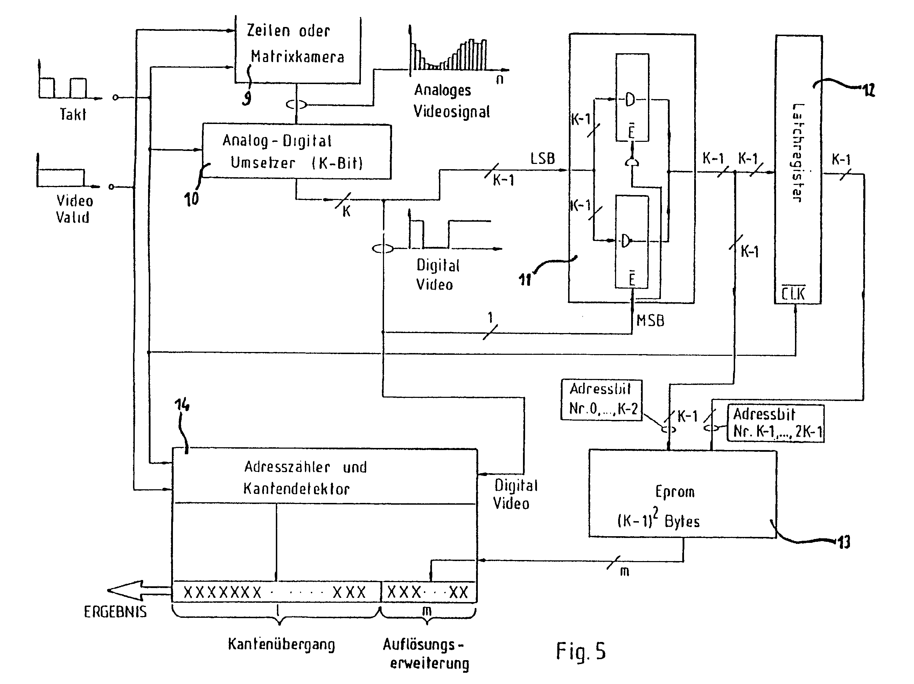

Das Blockschaltbild für eine nach diesem Verfahren arbeitende elektronische Schaltung zeigt Fig. 5. Kernstück des ganzen ist die Verwendung eines Festwertspeichers als Hardware-Rechenschaltung. Diese Erfindung alleine hätte wegen der zu geringen Flexibilität keine technische Bedeutung, wenn sie nicht in Zusammenfügung mit Halbleiterbildaufnehmern unter Ausnutzung der hohen Rechengeschwindigkeit und des nur begrenzten Datenformates für eine technisch bedeutsame Aussage ausgenützt würde. Der Vorteil liegt in der hohen Rechengeschwindigkeit, der Steigerung der Genauigkeit von Messungen und dem niedrigen Preis der so entstandenen Anordnung.

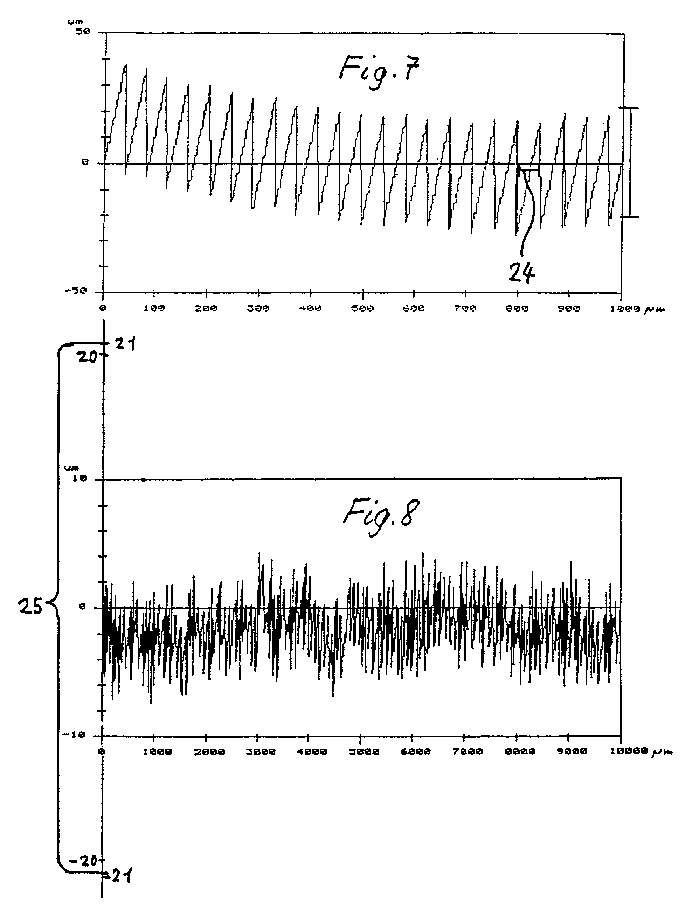

Das Anwendungsziel dieser Erfindung ist die Verbesserung der optischen Meßtechnik in Genauigkeit und Geschwindigkeit. Um das Abscannen eines Objektes mit der Zeilenkamera durchzuführen, ist es notwendig, alle Bildzeilen in ihrer Aufeinanderfolge abzuspeichern und sie danach zur Messung des gewünschten Merkmals auszuwerten. Besitzt die Kamera nun eine begrenzte Auflösung, dann streuen die Adresswerte der Abmessung eines Meßobjektes um plus oder minus einen Bildpunkt. In Fig. 7 ist prinzipiell die Meßwertabweichung einer Zeilenkamera bei der Vermessung einer Kante zu sehen und zwar ohne Auflösungserweiterung gemäß der vorliegenden Erfindung.

| Messweg | : | 1000 µm | Erstes Pixel | : | 1612 | Maximum: | 38,00 µm |
| 1 Schritt: | | 1 µm | Letztes Pixel: | | 1589 | Minimum: | -28,08 µm |

Der Abbildungsmaßstab für ein Pixel entspricht 42 µm. Mit dem Bezugszeichen 24 ist der Abstand für die Länge eines Bildpunktes bezeichnet. Man kann aus der Fig. 7 erkennen, daß ohne Auflösungserweiterung die Meßwertabweichung von Bildpunkt zu Bildpunkt 42 µm beträgt. Fig. 8 hingegen zeigt in einem geänderten Maßstab ein Diagramm mit der Meßwertabweichung einer Zeilenkamera bei der Vermessung einer Kante mit der Auflösungserweiterung gemäß der vorliegenden Erfindung.

| Messweg | : | 10000 µm | Erstes Pixel | : | 1427 | Maximum: | 4,274 µm |
| 1 Schritt: | | 10 µm | Letztes Pixel: | | 1589 | Minimum: | -7,384 µm |

Der Abbildungsmaßstab für ein Pixel entspricht 42 µm, die durch die Bildpunkte bedingte Meßunsicherheit beträgt mindestens plus/minus 21 µm. Diese Meßunsicherheit ist mittels der mit dem Bezugszeichen 25 bezeichneten Klammer in der Zeichnung zusätzlich dargestellt. Die Meßunsicherheit bei Berücksichtigung des erfindungsgemäßen Verfahrens zur Erweiterung der Auflösung zwischen zwei Bildpunkten einer Zeilenkamera beträgt bei einer Acht-Stufen-Auflösungserweiterung plus/minus 5,8 µm. Die Verbesserung ist damit größer-/gleich 3,5-fach.

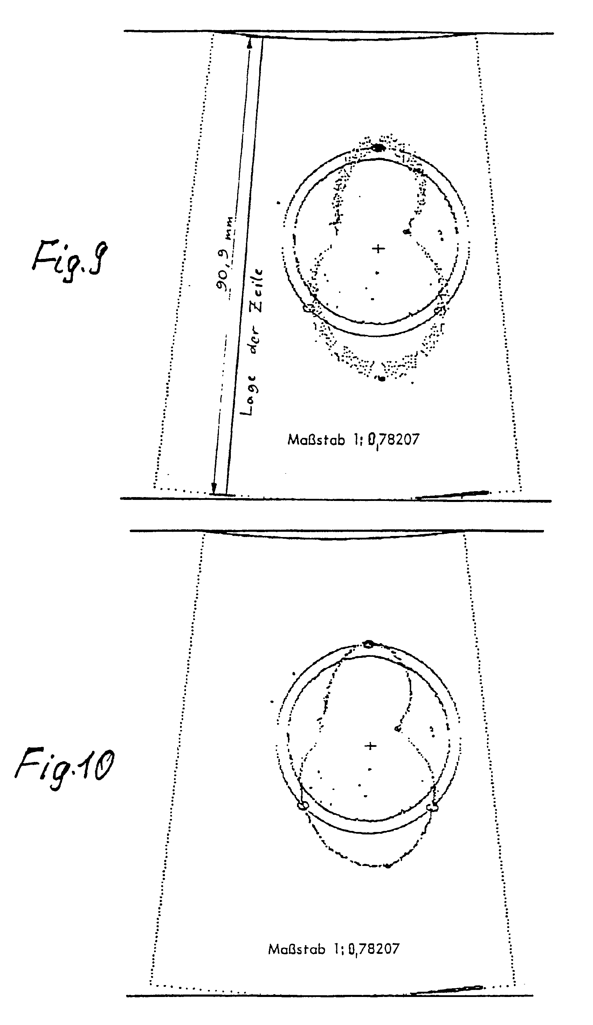

Greift sich der Rechner zur Bildung des Meßwertes nur eine Zeile aus den aufgezeichneten Bildzeilen heraus, so ist das Meßergebnis um diesen Wert fehlerhaft. Zur Verbesserung der Meßaussage kann er nun zum Beispiel mehrere benachbarte Zeilen zur Auswertung heranziehen und über diese Meßwerte den Mittelwert bilden, sofern das Meßobjekt sich nicht bewegt hat. Nach den Gesetzen der Statistik ist dieser Meßwert mit einem Fehler behaftet, der gegenüber dem ursprünglichen Wert verringert ist. Wird nun aber bei der Meßwertbildung zwischen den Adressen der einzelnen Dioden einer Zeile interpoliert, so liegt dieser Wert von sich aus näher am wahren Wert, auch wenn nur eine Zeile zur Maßbildung herausgegriffen wurde. In den Fig. 9 und Fig. 10 ist die Meßwertabweichung einer Zeilenkamera bei der Messung des Durchmessers eines Metallringes zu sehen. Das Prüfteil wird dabei auf einer Kreisbahn unter der Zeilenkamera hindurchgeführt und die Radiale mit einem Drehgeber aufgenommen

Figur 9:

Auswertung der Prüfung mit den Einstellungen
- Auflösungserweiterung          = 0 (0 = keine)

- R_0 der Radialbewegung    = 227,2 mm
- KAMBEREICH    = 90,9 mm
- Radius des Prüfteils    = 18,6159 mm
    Darstellung der Differenz: 617 Meßpunkte am Umfang

Figur 10:

    Auswertung der Prüfung mit den Einstellungen
- Auflösungserweiterung    = 1 (0 = keine)
- R_0 der Radialbewegung    = 227,2 mm
- KAMBEREICH    = 90,9 mm
- Radius des Prüfteils    = 18,617 mm
    Darstellung der Differenz: 617 Meßpunkte am Umfang

Die Abweichungen sind übertrieben, aber im gleichen Maßstab dargestellt. Bei Figur 9 wurde die Angabe der Adressverfeinerung der nach dieser Erfindung arbeitenden Auflösungserweiterung nicht mitinterpretiert. Deutlich ist die erheblich höhere Streuung der Meßwerte um den wahren Wert bei diesem Versuch zu sehen. Bei Verwendung von nur einer Meßzeile aus Figur 10 ist also mit einer weitaus geringeren Meßunsicherheit zu rechnen als bei Figur 9. Erst durch eine Mittelung über eine nennenswerte Zeilenzahl kann bei Figur 9 eine ähnlich Meßunsicherheit erreicht werden. Somit wird mit dem erfindungsgemäßen Verfahren nicht nur die Auflösung einer Kamera erweitert, sondern auch die Meßgeschwindigkeit gesteigert.

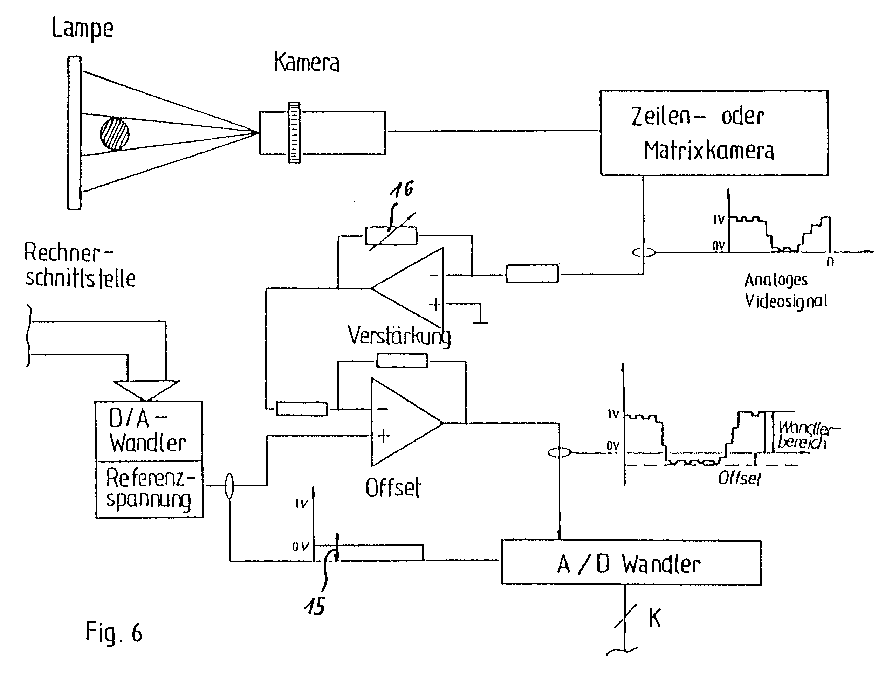

Die von der Kamera 9 kommenden Analogsignale der einzelnen Bildpunkte werden in einem Analog-Ditital-Umsetzer 10 in Binärwerte mit der dualen Datenwortbreite k umgewandelt, siehe Fig. 5. Die Anpassung des Ausgangs der Kameraanalogsignalaufbereitung an den Eingang des Analog-Digital-Umsetzers wird dabei so vorgenommen, daß ein komplette Abschatten eines Bildelementes dem digitalen Zustand Null und die von der Lichtquelle im Durchlichtverfahren maximal erreichbare Ausstrahlung dem Zustand des maximal möglichen Binärwertes entspricht. Das Bildelement wird demzufolge genau dann mit der halben möglichen Intensität angestrahlt, wenn der Analog-Ditital-Umsetzer sich an der Schwelle des Wechsels des höchstwertigsten Bits befindet. Die so vorgenommene Intensitätsanpassung entspricht der für meßtechnische Zwecke in der Regel angewandten Einrichtung des optischen und signaltechnischen Aufbaus, wobei die Digitalisierungsschwelle bei 50% festliegt. Bei marktüblichen Zeilenkamerasystemen kann die Digitalisierungsschwelle durch eine manuelle oder automatische Verstellung der Komparatorspannung verändert werden. Bei dem in dieser Erfindung angegebenen Verfahren ist diese Verstellung in dieser Form nicht möglich, da sie durch die Interpolation im digitalen Bereich festgelegt ist. Dennoch kann die Veränderung der Digitalisierungs- und damit der Interpolationsschwelle vorgenommen werden. Dieses geschieht durch eine Veränderung des analogen Intensitätssignales in Nullpunkt und Höhe gegenüber dem Eingangsbereich des Analog-Digital-Umsetzers. Eine solche Verstellung kann sehr leicht mit einem oder mehreren Operationsverstärkern vorgenommen werden, indem gemäß Fig. 6 der Nullpunkt durch Veränderung der Referenzspannung 15 und die Höhe der Signale durch Veränderung des Verstärkungsfaktors 16 eingestellt werden. Die Videosignale können somit beliebig an den Wandlungsbereich und die damit festgelegte Digitalisierungs- und Interpolationsschwelle angepaßt werden. Da das relativ zueinander geschieht, ist das Ergebnis gleichwertig mit einer Veränderung der Digitalisierungschwelle durch Veränderung der Komparatorspannung. Mit diesem Verfahren kann also jede Schwellwerteinstellung erreicht werden, nur daß eben nicht, wie bei dem üblichen Durchlichtverfahren, die Schwelle nach dem Signal eingestellt wird, sondern das Signal an die Schwelle angepaßt werden muß.

Zur Durchführung der Rechnung zur Linearinterpolation muß nun eine Ergebnis aus den digitalisierten Intensitätswerten derjenigen beiden Fotodioden heraus ermittelt werden, die am Schattenkantenübergang beteiligt sind. Zur Erzielung der geringst möglichen Rechenzeit wird für diese Rechnung ein programmierter Festwertspeicher verwendet. Bei einer Digitalisierung von 256 Stufen (acht Bit) zum Beispiel reicht ein 64 Kbyte EPROM aus, um unter der Adresse einer jeden möglichen Eingangskombination ein Ergebnis bis zu einer Breite von acht Bit auszugeben. Um den Aufwand am Halbleiter weiter zu verringern, macht sich die Erfindung die Tatsache zunutze, daß der hintere Teil des Datenwortes des Analog-Digital-Umsetzers unter Abtrennung des höchstmöglichen Bits mit der verbleibenden Wortbreite k-1 den Absolutwert der Entfernung eines Punktes zu dieser horizontalen 50%-Schwelle oberhalb und unterhalb dieser Schwelle angibt, wenn die Schwelle in der Mitte des Intervalls zwischen dem Zustand 011...1 und 100...0 liegt und das Datenwort für den Fall, daß das höchstwertigste Bit 0 ist, bitweise invertiert wird. Dieses wird im Blockschaltbild in Fig. 5 durch das Netzwerk 11 durchgeführt. Im Latchregister 12 wird das Datenwort vom Auslesetakt davor abgespeichert und für die weitere Verrechnung bereitgehalten.

Um das Teilungsverhältnis der ersten horizontalen Verbindungslinie zwischen den beiden Bildpunkten eines Kantenübergangs zu ermitteln, müssen die Absolutbeträge der Differenzen der beiden Bildpunkte zu diesem Schwellwert zueinander durch eine Division im Beziehung gesetzt werden. Da das Ergebnis dieser nur in einer endlichen Auflösung, die der Datenwortbreite m des von dieser Auflösungserweiterungsschaltung ermittelten Datenwortes entspricht, angegeben werden kann, wird in diesem Verfahren die Strecke dieser ersten horizontalen Verbindungslinie in mehrere Einzelintervalle aufgeteilt, die den als Ergebnis angebotenen möglichen Kombinationen des Datenwortes entsprechen. Das entsprechede Datenwort wird jeweils dann angeboten, wenn die theoretische Ausgleichslinie innerhalb dieses Intervalls die horizontale 50%-Schwelle schneidet. Die sich hieraus ergebende Formel für die Berechnung dieser Intervalle als INTEGER-Zahlenwert lautet

$$A = Y_1 \cdot 2^{(k-1)} + 0,5$$
$$B = 2^{(k-1)} - 1 - Y_2 + 0,5$$
$$C = \text{INT} \left( \frac{A}{A + B} \cdot 2^m \right)$$

Die Funktion INTEGER (abgekürzt INT) steht für den Vorkommaanteil des Zahlenwertes, auf den sie angewendet wird.

Darin bedeutet:

k = Datenwortbreite der Analog-Digital-Wandlung (in Bit)
l = Datenwortbreite des Adressbereichs der Kamerazeile (in Bit)
m = Datenwortbreite der Auflösungserweiterung (in Bit)

Die Erfindung macht sich des weiteren die Erkenntnis zu nutze, daß dieses Teilungsverhältnis unabhängig vom Vorzeichen des Kantenüberganges ist. Das mit dieser Formel ermittelte Ergebnis gilt unverändert, wenn die Absolutbeträge der Differenzen sowohl einen Übergang von hell nach dunkel als auch einen Übergang von dunkel nach hell vollführen. Daher ist es nicht erforderlich, durch Auswertung des höchstwertigsten Bits die Richtung des Übergangs zu bestimmen und damit zwei verschiedene Ergebnisse voneinander zu unterscheiden. Daher kann in der Verknüpfungsschaltung, die das Ergebnis liefert, die Adressierung ohne das höchstwertigste Bit durchgeführt werden. Als elektronisches Bauelement eignet sich hierfür besonders ein löschbarer Festwertspeicherbaustein (EPROM) 13. Es können aber auch andere Speichertypen verwendet werden. Unter der durch die beiden Datenworte gebildeten Adresse ist im Speicher das als Ergebnis dienende Datenwort abgelegt. Der dabei benötigte Speicherplatz errechnet sich zu

$$(k - 1)^2 \text{ Byts für } 1 < m \leq 8$$

Das hier angegebene Verfahren liefert bei jedem Taktzyklus der Kamera ein Ergebnis, gebildet aus dem aktuellen und dem vorangegangenen Grauwert, auch wenn kein Kantenübergang stattgefunden hat. Daher muß mit Hilfe eines Kantendetektors 14 die Grundadresse des Übergangs selbst gefunden und nur bei einem Kantenübergang das Datenwort dieser Auflösungserweiterung ausgewertet werden. Die Technik dieser Kantendetektion ist ebenfalls bekannt. Der Kantendetektor prüft das binärisierte Videosignal und leitet im Taktzyklus der Änderung dieses Signales von eins auf null oder von null auf eins den Zustand des Adresszählers, der die Übergangsadresse verkörpert, als Ergebnis in Richtung der Schnittstelle zu einer anderen Datenverarbeitungseinheit weiter.

Ein Blockschaltbild dieser Anordnung mit Beschreibung der Funktionsweise ist in Fig. 5 dargestellt. Es ist bezüglich seiner Auflösungserweiterung in Abhängigkeit von der verwendeten Datenwortbreite der Analog-Digital-Wandlereinheit k und der Datenwortbreite der Auflösungserweiterung m nahezu beliebig konfigurierbar.

Die Anwendung dieses Verfahrens ist nicht ausschließlich auf eine Zeilenkamera festgelegt. Wie im Titel der Anmeldung angesprochen, ist es ebenso möglich, dieses Verfahren zur Auflösungserweiterung bei einer Matrixkamera oder einem ähnlich aufgebauten Halbleiterbildaufnehmer anzuwenden. Die Auflösungserweiterung in Ausleserichtung der Bildinformation wird dabei genauso durchgeführt wie bei der Zeilenkamera, nur daß nicht immer die gleiche Zeile ausgelesen, sondern eine Zeile nach der anderen auf die Auflösungserweiterung durchgeschaltet und ausgewertet wird. Das Bild der Matrixkamera kann dadurch in Ausleserichtung in seiner Auflösung erweitert werden. Zur Auflösungserweiterung in Spaltenrichtung wird dann eine zweite, ebenso aufgebaute Einheit herangezogen, die zusätzlich die Grauwerte der vorangegangenen Zeile speichert und die im Augenblick des Auftretens der gleichen Adresse in der nachfolgenden Zeile eine Interpolation zwischen dem Bildpunkt gleicher Adresse der vorangegangenen Zeile und dem aktuellen Bildpunkt gemäß dem dieser Erfindung entsprechenden Verfahren durchgeführt. Das Ergebnis ist dann nicht mehr eine Adressverfeinerung in Ausleserichtung, sondern die Adressierung von Zwischenzeilen, in denen der eigentliche Kantenübergang stattfinden kann.

Gewerbliche Verwertbarkeit

Das erfindungsgemäße Verfahren ist in der Lage, eine Verringerung der Meßunsicherheit z. B. bei einem Längenmeßgerät, herbeizuführen, das auf der Basis einer berührungslos messenden optoelektronischen Zeilen- oder Matrixkamera aufgebaut ist.

**Patentansprüche**

1. Verfahren zur Erweiterung der Auflösung einer Zeilen- oder Matrixkamera mit einer elektronischen Ausewerteschaltung, wobei ein intransparentes Objekt im Durchlichtverfahren - die voll beleuchteten Bildpunkte sind dabei auf einen Hundertprozent-Wert ihrer Empfindlichkeit und die vom Objekt voll abgedeckten Bildpunkte auf einen Nullprozent-Wert ihrer Empfindlichkeit ausgesteuert - auf den Halbleiterbildaufnehmer einer solchen Kamera abgebildet wird, ferner die Grauwerte an einer Schattenkante oder einer anders gearteten Hell-Dunkel-Konfiguration digitalisiert werden - wobei die elektrischen Analogsignale der Bildpunkte einer Zeile mit einem Analog-Digital-Wandler in digitale Werte umgesetzt werden -, und eine Interpolation zwischen den unmittelbar an diesem Kantenübergang beteiligten beiden Bildpunkten durchgeführt wird,
**dadurch gekennzeichnet, daß**
zwei parallele Schieberegister vorgesehen sind, in denen jeweils die digitalisierten Intensitätswerte (=Datenworte) der beiden Bildpunkte der Schattenkante gespeichert werden, daß ferner eine Hardware-Rechenschaltung mit Speicherzellen vorgesehen ist, in welchen jeweils alle möglichen und vorausberechneten Interpolationsergebnisse zwischen zwei Bildpunkten unter entsprechenden Adressen abgelegt sind, daß ferner die gemessenen digitalisierten Intensitätswerte der Bildpunkte gleichzeitig als entsprechende Adressen für die in der Hardware-Rechenschaltung abgelegten Interpolationsergebnisse Verwendung finden und zur Anwahl und Abfrage dieser Speicherplätze dienen, daß zwischen den gemessenen digitalisierten Intensitätswerten der beiden Bildpunkte - jeweils zwischen in der zeitlichen Abfolge der Abtastung einer Zeile aufeinanderfolgenden und parallel anliegenden Datenworten - im Zeittakt des Auslesens der Bildpunkte mit einer festen Schwelle im Intensitätsbereich eine Interpolation zwischen den Werten der beiden Bildpunkte dieses Kantenübergangs durchgeführt wird und daß schließlich eine parallel zu der Auswerteschaltung arbeitende Kamerasignalvorveerbeitungselektronik durch die Auswertung des höchstwertigsten Bits als digitale Bildinformation das Auftreten eines Schattenkantenübergangs innerhalb des aktuellen Taktzyklusses feststellt und das in jedem Taktzyklus anfallende Ergebnis der elektronischen Auswerteschaltung zur Auflösungserweiterung nur dann übernimmt und weiterleitet, wenn ein Kantenübergang stattgefunden hat.

2. Verfahren nach Anspruch 1,
**dadurch gekennzeichnet,**
daß zwischen dem Datenwort des ersten Bildpunktes (6,21) und dem des zweiten Bildpunktes (7,22), die beide je in einem Parallelregister abgespeichert sind, die Bildung des bei der Interpolation erzielten Teilungsverhältnisses in Form einer Hardware-Rechenschaltung realisiert wird.

3. Verfahren nach einem oder mehreren der Ansprüche 1 bis 2,
**dadurch gekennzeichnet,**
daß vom hinteren Teil des Datenwortes des Analog-Digital-Umsetzers (10) das höchstwertigste Bit abgetrennt wird, und daß die verbleibende Wortbreite k - 1 den Absolutwert der Entfernung eines Bildpunktes zu der ersten horizontalen Verbindungslinie (1) bzw. der 50%-Schwelle ober- und unterhalb der Schwelle angibt.

4. Verfahren nach einem oder mehreren der Ansprüche 1 bis 3,
**dadurch gekennzeichnet,**
daß im Digitalbereich bei der Festlegung des Schwellwertes von 50% des Empfindlichkeitsbereiches in der Mitte zwischen den beiden Stufen des Wechsels des höchstwertigsten Bits die Absolutwerte dieser Entfernung zur 50 % - Schwelle durch eine vom höchstwertigsten Bit abhängige Inversion aller weiterer Bits des Datenwortes direkt ermittelt werden können.

5. Verfahren nach einem oder mehreren der Ansprüche 1 bis 4,
**dadurch gekennzeichnet,**
daß als Ergebnis der Bildung des bei der Interpolation erzielten Teilungsverhältnisses das Intervall (4,5) auf der ersten horizontalen Verbindungslinie (1) im m-Einzelintervalle aufgeteilt wird, die der Datenwortbreite m des von dieser elektronischen Auswerteschaltung ermittelten Datenwortes entspricht.

6. Verfahren nach einem oder mehreren der Ansprüche 1 bis 5,
**dadurch gekennzeichnet,**
daß bei linearer Interpolation durch die Interpolationsergebnisse, die unter den jeweiligen Adressen in der Hardware-Rechenschaltung abgelegt sind, im Intensitätsdiagramm aus den digitalisierten Intensitätswerten und der örtlichen Lage der Bildpunkte eine erste horizontale Verbindungslinie (1) im Intervall zwischen den zwei Bildpunkten eines Kantenübergangs von einer zweiten Verbindungslinie (3,8) zwischen den Intensitätswerten (6,7; 21,22) dieser beiden Bildpunkte im Verhältnis des Absolutbetrages der Differenz des ersten Bildpunktes zu diesem Schwellwert zum Absolutbetrag der Differenz des zweiten Bildpunktes zu diesem Schwellwert geteilt wird, daß dabei sich die erste horizontale Verbindungslinie (1) bei einem Schwellwert von 50% des Empfindlichkeitsbereiches befindet und daß schließlich der erste Bildpunkt (6,21) des Kantenübergangs in seiner Intensität über diesem fest eingestellten Schwellwert und die des zweiten (7,22) unter diesem Schwellwert liegt und umgekehrt.

7. Verfahren nach Anspruch 6,

**dadurch gekennzeichnet,**

daß das bei der Interpolation erzielte Teilungsverhältnis unabhängig von der Übergangsrichtung der Schattenkante von Hell nach Dunkel oder von Dunkel nach Hell ist.

8. Vorrichtung zur Erweiterung der Auflösung einer Zeilen- oder Matrixkamera mit einer elektronischen Auswerteschaltung für das Verfahren gemäß den Ansprüchen 1 bis 7,

**dadurch gekennzeichnet,**

daß die elektronische Auswerteschaltung wenigstens aus zwei parallelen Schieberegistern zur Speicherung der digitalisierten Intensitätswerte der beiden Bildpunkte der Schattenkante, einem Festwertsneicher als Hardware-Rechenschaltung mit Speicherzellen, einem den Zustand des Adreßzählers steuernden Kantendetektor und einem Taktgeber besteht.

9. Vorrichtung für das Verfahren gemäß den Ansprüchen 1 und 8,

**dadurch gekennzeichnet,**

daß die Hardware-Rechenschaltung aus einem Random Access Memory (RAM), einem Read Only Memory (ROM) oder einem Programmable Array Logik (PAL) besteht.


## Claims

1. Method of expanding the resolution of a linear-scanning or matrix type camera including an electronic analyzer circuitry, wherein a non-transparent object is projected onto the optical semi-conductor receiver of such a camera by a rear-projection technique - with the fully illuminated picture elements being controlled to a hundred-percent level of their sensitivity and with the picture elements fully covered by the object being controlled to a zero-percent level of their sensitivity - and wherein the grey shades at a shadow border or a light-dark configuration of another type are digitized - with the electrical analog signals of the picture elements of a line being converted into digital values by means of an analog-digital converter - and wherein an interpolation is carried out between the two picture elements directly involved at this border transition,

**characterized in** that

two parallel shift registers are provided in which the digitized intensity values (= data words) of the two picture elements of the shadow border are each stored, that moreover a hardware computing circuit with memory cells is provided in which all potential and previously calculated results of interpolation between two picture elements are each stored at appropriate addresses, that moreover the measured digitized intensity values of the picture elements are used simultaneously as appropriate addresses for the results of interpolation stored in the hardware computing circuit and serve for selection and interrogation of these memory locations, that at the timing of picture element readout an interpolation is carried out between the values of the two picture elements of the border transition between the measured digitized intensity values of the two picture elements - specifically between the data words applied in parallel in the chronological succession of line scanning - and that finally an electronic camera signal preprocessing system, which operates in parallel with the analyzer circuit, analyzes the most significant bits as digital video information so as to detect the occurrence of a shadow transition within the instantaneous cycle while it receives and transmits the result produced by the electronic analyzer in each cycle for expansion of the resolution only when a border transition has occurred.

2. Method according to to Claim 1,

**characterized in**

that between the data word of the first picture element (6, 21) and the data word of the second picture element (7, 22), which are both stored each in a parallel register, the formulation of the dividing ratio achieved in the interpolation is realized in the form of a hardware computing circuit.

3. Method according to any or several of Claims 1 to 2,

**characterized in**

the most significant bit is separated from the rear part of the data word of the analog-digital converter (10), and that the remaining word width k - 1 represents the absolute value of the distance between a picture element and the first horizontal connecting line (1) or the 50% threshold above and below the threshold, respectively.

4. Method according to any or several of Claims 1 to 3,

**characterized in**

by the time of definition of the threshold value of 50% of the sensitivity range half-way between the two stages of the change of the most-significant bit in the digital range, the absolute values of said distance from the 50% threshold can be directly determined by inversion of all following bits of the data word in dependence on the most-significant bit.

5. Method according to any or several of Claims 1 to 4,

**characterized in**

that as a result of the formation of the dividing ratio produced during the interpolation step, the interval (4, 5) along the first horizontal connecting line (1) is subdivided into m individual intervals in correspondence with the data word width m of the data word determined by said electronic analyzing circuit.

6. Method according to any or several of Claims 1 to 5,

**characterized in**

that in the event of a linear interpolation, in the intensity graph of said digitized intensity values and the local position of the picture elements, a first horizontal connecting line (1) in the interval between the two picture elements of a border transition is divided by a second connecting line (3, 8) between the intensity values (6, 7; 21, 22) of said two picture elements, in the ratio of the absolute amount of the difference between the first picture element and this threshold value to the absolute amount of the difference between the second picture element and said threshold value, with the first horizontal connecting line (1) being located at a threshold level corresponding to 50% of the sensitivity range, and that finally the first picture element (6, 21) of the border transition is higher, in terms of its intensity, than this fixedly set threshold while the intensity of the second picture element (7, 22) os lower than this threshold, and vice versa.

7. Method according to Claim 6,

**characterized in**

that the dividing ratio achieved in the interpolation step is independent of the sense of transition of the shadow border from light to dark or from dark to light.

8. Apparatus for expanding the resolution of a linear-scanning or matrix type camera including an electronic analyzer circuitry for carrying through the method according to Claims 1 to 7,

**characterized in**

that said electronic analyzer circuitry comprises at least two parallel shift rebisters for storing the digitized intensity values of said two picture elements of the shadow border, a read-only memory as the hardware computing circuit having memory cells, a border detector controlling the state of the address counter, and a timer.

9. Apparatus for the method according to Claims 1 and 8,

**characterized in**

that said hardware computing circuit consists of a random-access memory element (RAM), a read-only memory element (ROM) or a programmable array logic element (PAL).

## Revendications

1. Procédé d'extension de la résolution d'une caméra à lignes ou à matrice avec un circuit d'évaluation, par lequel un objet non-transparent en procédé d'éclairage par transmission - les points d'image pleinement éclairés étant modulés au cent pour cent de leur sensibilité et les éléments d'image complètement masqués par l'objet à zéro pour cent de leur sensibilité - est reproduit sur le récepteur optique semi-conducteur d'une telle caméra, les valeurs de gris à une bordure d'ombre ou à une configuration noir et blanc d'une autre nature étant en outre digitalisées - les signaux électriques analogiques des points d'image d'une ligne étant transformés au moyen d'un convertisseur analogique - digital en valeur digitales -, et une interpolation entre les deux points situés directement de part et d'autre de cette bordure est effectuée,

**caractérisé en ce que**

deux registres à décalage en parallèle sont prévus, dans lesquels sont mises en mémoire les valeurs d'intensité digitalisées (=donnée élémentaire) des deux points d'image de la bordure d'ombre, en ce que en outre un circuit calculateur avec cellules de mémoire est prévu, dans lesquelles tous les résultats possibles et calculés précédemment d'interpolations entre deux points d'image sont classés sous une adresse correspondante, en ce que de plus les valeurs digitalisées d'intensité mesurées des points d'image sont simultanément utilisées comme adresses correspondantes pour les résultats d'interpolation classées dans le circuit calculateur et servent pour choisir et interroger ces emplacements de mémoire, en ce que entre les valeurs digitalisées d'intensité mesurées des deux points d'image - respectivement entre deux données élémentaires consécutives et jointes en parallèle dans le rythme chronologique de l'échantillonage d'une ligne- à la cadence de lecture des points d'image une interpolation entre les valeurs des deux points d'image de part et d'autre de cette bordure est effectuée avec un seuil fixe dans le domaine d'intensité et en ce que enfin un système électronique de pré traitement de signal caméra travaillant en parallèle sur le circuit d'évaluation détecte au moyen de l'exploitation du bit le plus significatif comme information digitale d'image l'occurrence d'une transition de bordure d'ombre pendant le cycle d'horloge actuel et ne saisit et transmet le résultat, accessible à chaque cycle d'horloge, du circuit d'évaluation électronique pour l'extension de la résolution, que lorsqu'une traversée de bordure a eu lieu.

2. Procédé selon la revendication 1,

**caractérisé en ce** que

entre la donnée élémentaire du premier point d'image (6,21) et celle du second point d'image (7,22), toutes deux mises en mémoire chacune dans un registre en parallèle, la constitution du rapport de division obtenu par l'interpolation est réalisée sous la forme d'un circuit calculateur.

3. Procédé selon l'une ou plusieurs des revendications 1 à 2,

**caractérisé en ce** que

le bit le plus significatif est séparé de la dernière partie de la donnée élémentaire du convertisseur analogique - digital (10), et en ce que la longueur restante de donnée k-1, indique la valeur absolue de la distance d'un point d'image à la première ligne horizontale (1), respectivement au seuil de 50 % au-dessus et au-dessous du seuil.

4. Procédé selon l'une ou plusieurs des revendications 1 à 3,

**caractérisé en ce** que

dans le domaine digital pour l'établissement de la valeur de seuil de 50 % du domaine d'intensité au milieu entre les deux échelons du basculement du bit le plus significatif les valeurs absolues de cette distance au seuil de 50 % peuvent être déterminées directement par une inversion, dépendante du bit le plus significatif, de tous les bits restants de la donnée élémentaire.

5. Procédé selon l'une ou plusieurs des revendications 1 à 4,

**caractérisé en ce** que

comme résultat de la formation du rapport de division obtenu par l'interpolation, l'intervalle (4,5) sur la première ligne horizontale est divisé en m segments individuels, qui correspondent à la longueur m de donnée élémentaire de la donnée élémentaire déterminée par ce circuit d'évaluation électronique.

6. Procédé selon l'une ou plusierus des revendications 1 à 5,

**caractérisé en ce** que

au moyen des résultats d'interpolation, qui sont classés dans le circuit calculateur sous les adresses respectives, par interpolation linéaire dans le diagramme d'intensité à partir des valeurs d'intensité digitalisées et de la position locale des points d'image, une première ligne horizontale (1) est partagée, entre les deux points d'image d'une transition de bordure, par une seconde ligne (3,8) reliant les valeurs d'intensité (6,7; 21,22) de ces deux points d'image, dans le rapport de la valeur absolue de la différence entre le premier point et cette valeur de seuil à la valeur absolue de la différence entre le second point et cette valeur de seuil, en ce que la première ligne (1) se trouve ainsi à une valeur de seuil de 50 % du domaine de sensibilité, et en ce que enfin, par son intensité le premier point d'image (6,21) de la transition de bordure se situe au-dessus de ce seuil prédéterminé, tandis que le second (7,22) est au-dessous, et réciproquement.

7. Procédé selon la revendication 6,

**caractérisé en ce** que

le rapport de division obtenu par l'interpolation est indépendant de la direction de transition de la bordure d'ombre, de clair à sombre ou de sombre à clair.

8. Dispositif pour l'extension de la résolution d'une caméra à lignes ou à matrice avec un circuit d'évaluation électronique pour le procédé selon les revendications 1 à 7,

**caractérisé en ce** que

le circuit d'évaluation électronique consiste au moins en deux registres à décalage en parallèle pour la mise en mémoire des valeurs d'intensité digitalisées des deux points d'image de la bordure d'ombre, une mémoire morte comme circuit calculateur avec cellules de mémoire, un détecteur de bordures contrôlant l'état d'un compteur d'adresse, et une horloge.

9. Dispositif pour le procédé selon les revendications 1 et 8,

**caractérisé en ce** que

le circuit calculateur consiste en une mémoire à accès sélectif (RAM), une mémoire morte (ROM) ou une logique à réseau programmable (PAL).

12

Fig. 1

Fig. 2

Fig. 3

EP 0 324 757 B1

0 1 2 3 4 5 6 7

Fig. 4

Fig. 5

Takt

Video Valid

Zeilen oder Matrixkamera 9

Analog - Digital Umsetzer (K-Bit) 10

Analoges Videosignal

Digital Video

K-1 LSB

K

MSB

1

K-1 K-1 K-1

Latchregister 12

CLK

Adressbit Nr. 0,...,K-2

Adressbit Nr. K-1,...,2K-1

K-1 K-1

Eprom (K-1)² Bytes 13

Adresszähler und Kantendetektor 14

Digital Video

XXXXXXX · · · · · XXX | XXX · · XX

m

ERGEBNIS

Kantenübergang

Auflösungs - erweiterung

EP 0 324 757 B1

Lampe

Kamera

Zeilen- oder Matrixkamera

Rechner-schnittstelle

16

Verstärkung

Analoges Videosignal

1V
0V

D/A-Wandler

Referenz-spannung

Offset

1V
0V

Wandler-bereich

Offset

1V

0V

15

A/D Wandler

K

Fig. 6

EP 0 324 757 B1

Fig.7

24

Fig.8

Fig.9

90,9 mm

Lage der Zeile

Maßstab 1: 0,78207

Fig.10

Maßstab 1: 0,78207